# EUROPEAN PATENT APPLICATION

(11) **EP 4 841 681 A1**
(43) Date of publication of application: **18.11.2026**
(21) Application number: 25839789.2
(22) Date of filing: 17.02.2025
(51) Int. Cl.: H01M 4/04

(54) **ELECTRODE SHEET, BATTERY CELL, BATTERY, AND ELECTRICAL DEVICE**

(30) Priority: 16.07.2024 CN 202410953888
(71) Applicant: Contemporary Amperex Technology Co., Limited, Ningde, Fujian 352100 (CN)
(72) Inventor: XIONG, Xueqing, Ningde, Fujian 352100 (CN); WANG, Manman, Ningde, Fujian 352100 (CN); ZHENG, Wei, Ningde, Fujian 352100 (CN); WU, Xiaowen, Ningde, Fujian 352100 (CN); GE, Xiaoming, Ningde, Fujian 352100 (CN)
(74) Representative: Ran, Handong
(86) International application number: PCT/CN2025/077680
(87) International publication number: WO 2026/016466

(57) **Abstract**

The present application provides an electrode sheet, a battery cell, a battery, and an electrical device. The battery cell comprises a first electrode sheet and a second electrode sheet having opposite polarities; the first electrode sheet comprises a first current collecting portion, a first tab portion, a first active material layer, and a first insulating layer; the first tab portion is connected to at least one side of the first current collecting portion; the first active material layer is provided on at least one surface of the first current collecting portion in the thickness direction of the first electrode sheet; the first active material layer comprises two first end surfaces opposite to each other in a first direction; the first direction is parallel to a direction pointing from the first current collecting portion to the first tab portion; and the first insulating layer is at least provided on a surface of the first current collecting portion and is connected to at least one first end surface. The present application can improve the use reliability of the battery cell.

## Description

### CROSS-REFERENCE TO RELATED APPLICATIONS

The present application claims priority to Chinese Patent Application No. 202410953888.4, filed on July 16, 2024 and entitled "ELECTRODE PLATE, BATTERY CELL, BATTERY, AND POWER CONSUMING APPARATUS", which is incorporated herein by reference in its entirety.

### TECHNICAL FIELD

The present application relates to the field of batteries, and specifically, to an electrode plate, a battery cell, a battery, and a power consuming apparatus.

### BACKGROUND

Battery cells have properties such as a high capacity and a long life, and are therefore widely used in electronic devices such as a mobile phone, a notebook computer, an electric scooter, an electric vehicle, an electric airplane, an electric ship, an electric toy car, an electric toy ship, an electric toy airplane, and an electric tool.

With an increasingly wide application range of batteries, requirements on performance of the batteries are more stringent. However, in a related technology, use reliability is poor during use of the battery cells.

### SUMMARY

The present application is proposed in view of the foregoing subject, and an objective of the present application is to provide an electrode plate, a battery cell, a battery, and a power consuming apparatus, so that use reliability of the battery cell can be improved.

According to a first aspect, an embodiment of the present application provides a battery cell. The battery cell includes a first electrode plate and a second electrode plate that have opposite polarities. The first electrode plate includes a first current collection portion, a first tab portion, a first active material layer, and a first insulation layer. The first tab portion is connected to at least one side of the first current collection portion. The first active material layer is provided on at least one surface of the first current collection portion along a thickness direction of the first electrode plate. The first active material layer includes two first end surfaces opposite to each other along a first direction. The first direction is parallel to a direction pointing from the first current collection portion to the first tab portion. The first insulation layer is provided on at least a surface of the first current collection portion, and is connected to at least one of the first end surfaces.

Therefore, in this embodiment of the present application, the first insulation layer is provided on the first end surface of the first active material layer, so that a risk of a short circuit between the first electrode plate and the second electrode plate can be reduced by using the first insulation layer, thereby improving use reliability of the battery cell.

In some embodiments, a surface of the first insulation layer facing away from the first current collection portion is flush with a surface of the first active material layer facing away from the first current collection portion. When the surfaces are flush, uniform stress is applied to the second electrode plate, so that a lithium deposition morphology can be improved.

In some embodiments, the first active material layer includes a first film layer and a second film layer. The first film layer is provided on at least one surface of the first current collection portion along the thickness direction. The first film layer includes two first surfaces opposite to each other along the first direction. The second film layer is provided on a surface of the first film layer facing away from the first current collection portion. The second film layer includes two second surfaces opposite to each other along the first direction. The first end surface includes the first surface and the second surface. Both the first surface and the second surface are connected to the first insulation layer.

Therefore, in this embodiment of the present application, the first insulation layer can protect end surfaces of the first film layer and the second film layer, to reduce a risk of heat release induced by self-discharge when lithium powders drift to an edge of the first active material layer, thereby improving the use reliability of the battery cell.

In some embodiments, the first film layer extends beyond the second film layer along the first direction. A dimension of the first film layer along the first direction is larger, so that a capacity of the first electrode plate can be further improved, thereby improving an energy density of the battery cell. In addition, it is beneficial for a step structure of the first insulation layer to cover the edge of the first active material layer, and a connection area between the first insulation layer and the first active material layer can be increased, thereby improving combination stability between the first insulation layer and the first active material layer.

In some embodiments, the first insulation layer includes a first insulation portion and a second insulation portion. The first insulation portion is disposed on a surface of the first current collection portion, and is connected to the first surface. The second insulation portion is disposed on a surface of the first insulation portion facing away from the first current collection portion, and is connected to the second surface. The second insulation portion extends beyond the first surface along the first direction.

Therefore, through the foregoing disposition in this embodiment of the present application, the second insulation portion is enabled to further perform insulation protection on the first film layer, for example, on an exposed surface of the first film layer facing away from the first current collection portion, thereby further reducing the risk of heat release induced by self-discharge when the lithium powders are in contact with the first active material layer.

In some embodiments, a surface of the second insulation portion facing away from the second film layer is flush with a surface of the first insulation portion facing away from the first film layer. In this case, the second insulation portion can improve a protective effect on the first film layer. In addition, the first insulation layer and the first active material layer are basically provided with equal thicknesses, so that a more uniform pressure can be applied to the second electrode plate. Therefore, a lithium deposition morphology in the second electrode plate is more excellent, and it is not easy to form a lithium dendrite, thereby further improving the use reliability of the battery cell.

In some embodiments, a dimension of the first insulation portion along the first direction ranges from 0.5 mm to 15 mm. When the dimension of the first insulation portion along the first direction falls within the foregoing range, an edge of the first film layer can be effectively insulated and protected.

In some embodiments, a dimension of the second insulation portion along the first direction ranges from 0.2 mm to 3 mm. When the dimension of the second insulation portion along the first direction falls within the foregoing range, an edge of the second film layer can be effectively insulated and protected.

In some embodiments, a host material of the first insulation layer includes at least one of an inorganic insulating material and an organic insulating material. Inorganic particles can have functions of insulation and heat resistance, thereby improving an insulation effect and a heat resistance effect on the edge of the first active material layer. A binding force between the organic insulating material and the first active material layer is stronger, so that the first active material layer can be excellently insulated and protected.

In some embodiments, the inorganic insulating material includes inorganic particles. The inorganic particles include one or more of boehmite, aluminum oxide, aluminum hydroxide, barium sulfate, magnesium oxide, magnesium hydroxide, calcium oxide, cerium oxide, zirconium titanate, barium titanate, and magnesium fluoride.

In some embodiments, the organic insulating material includes one or more of polyolefin, epoxy resin, polyacrylic acid, and styrene-butadiene rubber.

In some embodiments, the second electrode plate includes a second current collection portion and a second active material layer. The second active material layer is provided on at least one surface of the second current collection portion along the thickness direction. The second active material layer and the first active material layer are oppositely provided along the thickness direction. Active ions migrate between the second active material layer and the first active material layer, to implement cyclic charge and discharge of the battery cell.

In some embodiments, the first electrode plate is a positive electrode plate, and the second electrode plate is a negative electrode plate. A projection plane of the second active material layer partially overlaps a projection plane of the first insulation layer along the thickness direction.

Therefore, in this embodiment of the present application, the first insulation layer is located at an edge of the first active material layer along the first direction, and the projection plane of the second active material layer partially overlaps the projection plane of the first insulation layer. This means that a region in which lithium ions are deintercalated from the first active material layer is smaller than a region in which the second active material layer receives lithium ions, so that substantially all the lithium ions deintercalated from the first active material layer can be received by the second active material layer, thereby reducing a risk of lithium plating from the second electrode plate.

In some embodiments, the second active material layer includes a third film layer and a fourth film layer. The third film layer is provided on at least one surface of the second current collection portion along the thickness direction. The fourth film layer is provided on a surface of the third film layer facing away from the second current collection portion. The third film layer extends beyond the fourth film layer along the first direction. This is beneficial to improving a capacity of the negative electrode plate, thereby improving the energy density of the battery cell.

In some embodiments, a projection plane of the third film layer partially overlaps the projection plane of the first insulation layer along the thickness direction.

Therefore, in this embodiment of the present application, a region in which the third film layer receives lithium ion is larger than the region in which lithium ions are deintercalated from the first active material layer, thereby reducing a risk of lithium plating from the third film layer in the second electrode plate.

In some embodiments, a projection plane of the fourth film layer partially overlaps the projection plane of the first insulation layer along the thickness direction, so that the region in which the second active material layer receives the lithium ions can be further enlarged, thereby reducing the risk of lithium plating from the second electrode plate.

In some embodiments, the third film layer includes a film-layer body and a film-layer extension portion. The film-layer body is disposed opposite to the fourth film layer along the thickness direction. The film-layer extension portion is connected to at least one side of the film-layer body along the first direction, and extends beyond the fourth film layer. The first insulation layer extends beyond the film-layer extension portion along the first direction.

Therefore, in this embodiment of the present application, the first insulation layer can cover a foreign object such as a glitch on the second electrode plate, thereby further reducing a risk of a short circuit between a positive electrode and a negative electrode, and improving the use reliability of the battery cell.

In some embodiments, a dimension of the film-layer extension portion along the first direction ranges from 0.2 mm to 5 mm. When the dimension of the film-layer extension portion along the first direction falls within the foregoing range, the region in which the second active material layer receives the lithium ions can be enlarged, thereby reducing the risk of lithium plating from the second electrode plate.

In some embodiments, the second active material layer includes two second end surfaces opposite to each other along the first direction. The second electrode plate further includes a second insulation layer. The second insulation layer is provided on at least a surface of the second current collection portion, and is connected to at least one of the second end surfaces.

Therefore, in this embodiment of the present application, the second insulation layer is provided on the second end surface of the second active material layer, so that the risk of the short circuit between the first electrode plate and the second electrode plate can be reduced by using the second insulation layer, thereby improving the use reliability of the battery cell.

According to a second aspect, the present application provides an electrode plate. The electrode plate includes a first current collection portion, a first tab portion, a first active material layer, and a first insulation layer. The first tab portion is connected to at least one side of the first current collection portion. The first active material layer is provided on at least one surface of the first current collection portion along a thickness direction of a first electrode plate. The first active material layer includes two first end surfaces opposite to each other along a first direction. The first direction is parallel to a direction pointing from the first current collection portion to the first tab portion. The first insulation layer is provided on at least a surface of the first current collection portion, and is connected to at least one of the first end surfaces.

Therefore, in this embodiment of the present application, the first insulation layer is provided on the first end surface of the first active material layer, so that a risk of a short circuit between the first electrode plate and a second electrode plate can be reduced by using the first insulation layer, thereby improving use reliability of a battery cell.

In some embodiments, a surface of the first insulation layer facing away from the first current collection portion is flush with a surface of the first active material layer facing away from the first current collection portion. When the surfaces are flush, uniform stress is applied to the second electrode plate, so that a lithium deposition morphology can be improved.

In some embodiments, the first active material layer includes a first film layer and a second film layer. The first film layer is provided on at least one surface of the first current collection portion along the thickness direction. The first film layer includes two first surfaces opposite to each other along the first direction. The second film layer is provided on a surface of the first film layer facing away from the first current collection portion. The second film layer includes two second surfaces opposite to each other along the first direction. The first end surface includes the first surface and the second surface. Both the first surface and the second surface are connected to the first insulation layer.

Therefore, in this embodiment of the present application, the first insulation layer can protect end surfaces of the first film layer and the second film layer, to reduce a risk of heat release induced by self-discharge when lithium powders drift to an edge of the first active material layer, thereby improving the use reliability of the battery cell.

In some embodiments, the first film layer extends beyond the second film layer along the first direction. A dimension of the first film layer along the first direction is larger, so that a capacity of the first electrode plate can be further improved, thereby improving an energy density of the battery cell. In addition, it is beneficial for a step structure of the first insulation layer to cover the edge of the first active material layer, and a connection area between the first insulation layer and the first active material layer can be increased, thereby improving combination stability between the first insulation layer and the first active material layer.

In some embodiments, the first insulation layer includes a first insulation portion and a second insulation portion. The first insulation portion is disposed on a surface of the first current collection portion, and is connected to the first surface. The second insulation portion is disposed on a surface of the first insulation portion facing away from the first current collection portion, and is connected to the second surface. The second insulation portion extends beyond the first surface along the first direction.

Therefore, through the foregoing disposition in this embodiment of the present application, the second insulation portion is enabled to further perform insulation protection on the first film layer, for example, on an exposed surface of the first film layer facing away from the first current collection portion, thereby further reducing the risk of heat release induced by self-discharge when the lithium powders are in contact with the first active material layer.

In some embodiments, a surface of the second insulation portion facing away from the second film layer is flush with a surface of the first insulation portion facing away from the first film layer. In this case, the second insulation portion can improve a protective effect on the first film layer. In addition, the first insulation layer and the first active material layer are basically provided with equal thicknesses, so that a more uniform pressure can be applied to the second electrode plate. Therefore, a lithium deposition morphology in the second electrode plate is more excellent, and it is not easy to form a lithium dendrite, thereby further improving the use reliability of the battery cell.

In some embodiments, a dimension of the first insulation portion along the first direction ranges from 0.5 mm to 15 mm. When the dimension of the first insulation portion along the first direction falls within the foregoing range, an edge of the first film layer can be effectively insulated and protected.

In some embodiments, a dimension of the second insulation portion along the first direction ranges from 0.2 mm to 3 mm. When the dimension of the second insulation portion along the first direction falls within the foregoing range, an edge of the second film layer can be effectively insulated and protected.

According to a third aspect, the present application provides a battery, including the battery cell in any one of the embodiments of the first aspect of the present application.

According to a fourth aspect, the present application provides a power consuming apparatus, including the battery cell in the third aspect of the present application.

### BRIEF DESCRIPTION OF THE DRAWINGS

To describe the technical solutions in embodiments of the present application more clearly, the accompanying drawings required for describing the embodiments of the present application will be described briefly below. It is evident that the accompanying drawings described below show only some embodiments of the present application, and a person of ordinary skill in the art may still derive other accompanying drawings from the accompanying drawings without creative efforts.
FIG. 1 is a schematic diagram of a structure of a vehicle according to some embodiments of the present application;
FIG. 2 is a schematic diagram of an exploded view of a battery according to some embodiments of the present application;
FIG. 3 is a schematic diagram of a structure of a battery module according to some embodiments of the present application;
FIG. 4 is a schematic diagram of a structure of a battery cell according to some embodiments of the present application;
FIG. 5 is a schematic diagram of an exploded view of a battery cell according to some embodiments of the present application;
FIG. 6 is a schematic diagram of a structure of an electrode assembly of a battery cell according to some embodiments of the present application;
FIG. 7 is a schematic diagram of a structure of a first electrode plate of a battery cell according to some embodiments of the present application; and
FIG. 8 is a schematic diagram of a structure of a second electrode plate of a battery cell according to some embodiments of the present application.

The accompanying drawings are not necessarily drawn to actual scale.

Descriptions of reference numerals are as follows:
X: thickness direction; Y: first direction;
1: vehicle; 2: battery; 3: controller; 4: motor; 5: box body; 5a: first box body portion; 5b: second box body portion; 5c: accommodating space; 6: battery module; 7: battery cell;
10: electrode assembly; 12: main body portion;
20: shell; 21: housing; 22: end cover;
40: first electrode plate; 41: first current collection portion; 42: first tab portion;
43: first active material layer; 430: first end surface;
431: first film layer; 4310: first surface;
432: second film layer; 4320: second surface;
44: first insulation layer; 441: first insulation portion; 442: second insulation portion;
50: second electrode plate;
51: second current collection portion; 52: second tab portion;
53: second active material layer; 530: second end surface;
531: third film layer; 5310: third surface; 5311: film-layer body; 5312: film-layer extension portion;
532: fourth film layer; 5320: fourth surface;
54: second insulation layer; and
60: separator.

### DETAILED DESCRIPTION

Hereinafter, embodiments of an electrode plate, a battery cell, a battery, and a power consuming apparatus of the present application are specifically disclosed in detailed descriptions. However, there will be cases that unnecessary detailed descriptions are omitted. For example, there are cases that detailed descriptions of well-known matters are omitted and repeated descriptions of actually the same structures are omitted. Thus, the following descriptions do not become unnecessarily lengthy, which facilitate the easy comprehension of a person skilled in the art. In addition, the accompanying drawings and the following explanations are provided for a person skilled in the art to fully understand the present application and are not intended to limit the subject matter recorded in the claims.

A "range" disclosed in the present application is limited in a form of a lower limit and an upper limit. A given range is limited by selecting a lower limit and an upper limit, and the selected lower limit and upper limit define a boundary of the special scope. The range defined in this way may include or may not include end values, and may be arbitrarily combined, that is, any lower limit may be combined with any upper limit to form a new range. For example, if ranges 60 to 120 and 80 to 110 are listed for a specific parameter, it is understood that the ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4, and 2 to 5. In the present application, unless otherwise specified, the numerical range "a to b" represents the abbreviated representation of any combination of real numbers between a and b, and both a and b are real numbers. For example, the numerical range "0 to 5" represents that all real numbers between "0 and 5" are listed herein, and "0 to 5" is merely an abbreviated representation of the combination of these numbers. In addition, when a parameter is expressed as an integer ≥2, it is equivalent to disclosing that the parameter is, for example, an integer such as 2, 3, 4, 5, 6, 7, 8, 9, 10, 11, 12, or the like.

Unless otherwise specially specified, all the embodiments and optional embodiments of the present application can be combined with each other to form new technical solutions.

Unless otherwise specified, all technical features and optional technical features of the present application can be combined with each other to form new technical solutions.

Unless otherwise specified, all the steps of the present application may be performed sequentially or randomly, and in some embodiments, sequentially. For example, the method includes steps (a) and (b), indicating that the method can include steps (a) and (b) that are sequentially performed, as well as steps (b) and (a) that are sequentially performed. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Reference herein to "an embodiment" means that a particular feature, structure, or characteristic described in connection with the embodiment can be included in at least one embodiment of the present application. The phrase shown in various locations in the specification may not necessarily refer to a same embodiment, and is not an independent or optional embodiment exclusive from another embodiment.

In the description of the present application, it should be noted that the terms "mounting", "connecting", "connection" and "attachment" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. A person of ordinary skill in the art may understand specific meanings of the terms in the present application according to specific situations.

In the present application, the term "and/or" is merely an association to describe associated objects, and means that there are three relationships, such as A and/or B, indicating that A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of various components in the embodiments of the present application shown in the drawings, as well as the overall thickness, length, width and other dimensions of integrated device, are merely for illustrative purposes, and should not constitute any limitations on the present application.

"Plurality of" in the present application means two or more (including two). In the embodiments of the present application, the battery cell may be a secondary battery. The secondary battery refers to a battery cell that can be recharged to activate active materials for continuous use after the battery cell is discharged.

In the present application, battery cells may include a lithium-ion secondary battery cell, a lithium-ion primary battery cell, a lithium-sulfur battery cell, a sodium-lithium-ion battery cell, a sodium-ion battery cell, a magnesium-ion battery cell, a lithium metal battery cell, a sodium metal battery, or the like, which are not limited in the embodiments of the present application. The battery cells may be cylindrical, flat, rectangular, or in other shapes, which are also not limited in the embodiments of the present application. The battery cells are generally divided into three types according to encapsulation manners: cylindrical battery cells, rectangular battery cells, and pouch battery cells, which are also not limited in the embodiments of the present application.

A battery mentioned in the embodiments of the present application refers to a single physical module including one or more battery cells to provide a higher voltage and a higher capacity. For example, the battery mentioned in the present application may include a battery module, a battery pack, or the like. The battery generally includes a box body configured to encapsulate one or more battery cells. The box body can prevent liquid or another foreign matter from affecting charging or discharging of the battery cell.

The battery cell includes an electrode assembly and an electrolyte solution. The electrode assembly includes a positive electrode plate, a negative electrode plate, and an isolation member. The battery cell works mainly relying on movement of active ions, such as lithium ions, between the positive electrode plate and the negative electrode plate. There is a risk of a short circuit between the positive electrode plate and the negative electrode plate, worsening use reliability of the battery cell.

In view of this, an electrode plate is improved in the embodiments of the present application. An insulation layer is provided on an end surface of an active material layer in the electrode plate, so that a risk of a short circuit between a positive electrode plate and a negative electrode plate is reduced by using the insulation layer.

The battery cell described in the embodiments of the present application is applicable to a battery and a power consuming apparatus using a battery.

The power consuming apparatus may be a vehicle, a mobile phone, a portable device, a notebook computer, a ship, a spacecraft, an electric toy, an electric tool, or the like. The vehicle may be a fuel powered vehicle, a gas-powered vehicle, or a new energy vehicle. The new energy vehicle may be a pure electric vehicle, a hybrid electric vehicle, or an extended range vehicle, or the like. The spacecraft includes an airplane, a rocket, a space shuttle, a spaceship, and the like. The electric toy includes a fixed or mobile electronic toy, such as a game console, an electric vehicle toy, an electric ship toy, an electric aircraft toy, and the like. The electric tool includes a metal-cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, an electric planer, and the like. The embodiments of the present application do not impose special limitations on the above power consuming apparatuses.

In the following embodiments, for convenience of description, the power consuming apparatus is, for example, a vehicle.

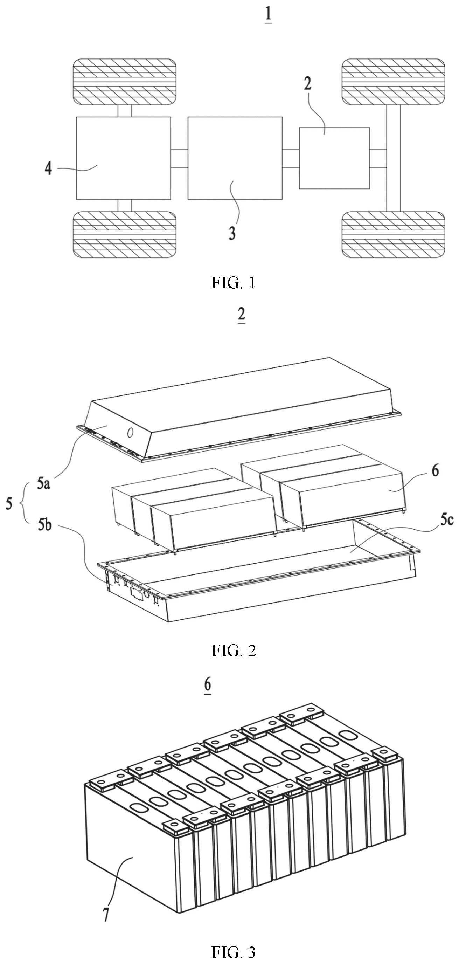

FIG. 1 is a schematic diagram of a structure of a vehicle according to some embodiments of the present application.

As shown in FIG. 1, a battery 2 is arranged inside a vehicle 1. The battery 2 can be arranged at the bottom, head, or tail of the vehicle 1. The battery 2 may be configured to supply power to the vehicle 1. For example, the battery 2 may be used as an operation power supply of the vehicle 1.

The vehicle 1 may further include a controller 3 and a motor 4. The controller 3 is configured to control the battery 2 to supply power to the motor 4, for example, to satisfy operating electricity requirements during starting, navigation, and traveling of the vehicle 1.

In some embodiments of the present application, the battery 2 may serve not only as a power supply for operating the vehicle 1, but also as a power supply for driving the vehicle 1, to alternatively or partially replace fuel or natural gas to provide driving power for the vehicle 1.

FIG. 2 is a schematic diagram of an exploded view of a battery according to some embodiments of the present application. As shown in FIG. 2, a battery 2 includes a box body 5 and a battery cell (not shown in FIG. 2), and the battery cell is accommodated in the box body 5.

The box body 5 is configured to accommodate the battery cell, and the box body 5 may use a plurality of structures. In some embodiments, the box body 5 may include a first box body portion 5a and a second box body portion 5b. The first box body portion 5a and the second box body portion 5b cover each other, and the first box body portion 5a and the second box body portion 5b jointly define an accommodating space 5c for accommodating the battery cell. The second box body portion 5b may be of a hollow structure being open at one end. The first box body portion 5a may be of a plate-shaped structure. The first box body portion 5a covers an opening side 5 of the second box body portion 5b, to form the box body 5 having the accommodating space 5c. Alternatively, both the first box body portion 5a and the second box body portion 5b may be of a hollow structure being open on one side, and an opening side of the first box body portion 5a covers an opening side of the second box body portion 5b, to form the box body 5 having the accommodating space 5c. Certainly, the first box body portion 5a and the second box body portion 5b may be of a variety of shapes, for example, a cylinder or a cuboid.

To improve sealing performance after the first box body portion 5a and the second box body portion 5b are connected, a sealing member, for example, a sealant or a sealing ring, may also be arranged between the first box body portion 5a and the second box body portion 5b.

Assuming that the first box body portion 5a covers a top of the second box body portion 5b, the first box body portion 5a may also be referred to as an upper box cover, and the second box body portion 5b may also be referred to as a lower box body.

In the battery 2, there may be either one battery cell or a plurality of battery cells. If there are a plurality of battery cells, the plurality of battery cells may be connected in series, parallel, or series-parallel. Series-parallel connection means that both series connection and parallel connection exist among the plurality of battery cells. The plurality of battery cells may be directly connected in series, parallel, or series-parallel together, and then the whole formed by the plurality of battery cells may be accommodated in the box body 5. Certainly, alternatively, a battery module 6 may be formed by a plurality of battery cells that are first connected in series, parallel, or series-parallel, and a plurality of battery modules 6 are then connected in series, parallel, or series-parallel to form a whole and accommodated in the box body 5.

The battery cell may be a smallest unit forming a battery.

FIG. 3 is a schematic diagram of a structure of a battery module shown in FIG. 2.

In some embodiments, as shown in FIG. 3, there are a plurality of battery cells 7, and the plurality of battery cells 7 are first connected in series, parallel, or series-parallel to form a battery module 6. A plurality of battery modules 6 are then connected in series, parallel, or series-parallel to form a whole and accommodated in a box body.

The plurality of battery cells 7 in the battery module 6 may be electrically connected via a bus component, to implement series connection, parallel connection, or series-parallel connection among the plurality of battery cells 7 in the battery module. There may be one or more bus components, and each bus component is configured to electrically connect at least two battery cells 7.

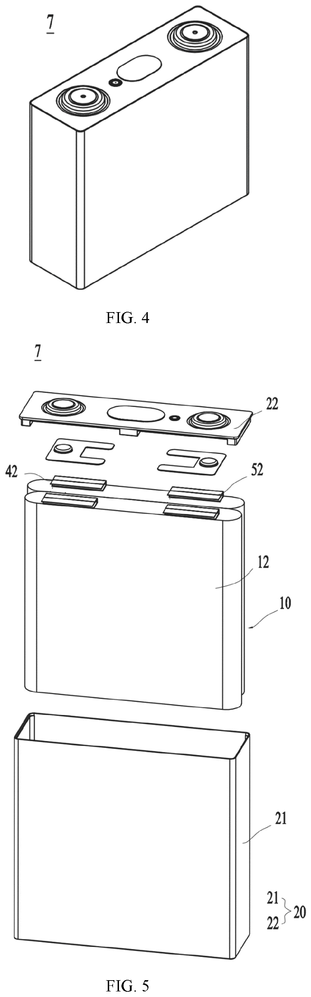

FIG. 4 is a schematic diagram of a structure of a battery cell 7 according to some embodiments of the present application. FIG. 5 is a schematic diagram of an exploded view of a battery cell 7 shown in FIG. 4.

As shown in FIG. 4 and FIG. 5, in some embodiments, the battery cell 7 includes an electrode assembly 10 and a shell 20. The electrode assembly 10 is accommodated in the shell 20.

In some embodiments, the shell 20 includes a housing 21 and an end cover 22. The housing 21 has an opening, and the end cover 22 is configured to cover the opening.

The housing 21 is a component for cooperating with the end cover 22 to form an internal cavity of the battery cell 7, and the formed internal cavity can be configured for accommodating the electrode assembly 10, an electrolyte, and other components. The housing 21 may be of a variety of shapes, for example, a cylinder or a cuboid. The shape of the housing 21 may be determined based on a specific shape of the electrode assembly 10. For example, if the electrode assembly 10 has a cylindrical structure, a cylindrical structure may be selected for the housing 21. If the electrode assembly 10 has a cuboid structure, a cuboid structure may be selected for the housing 21.

The housing 21 can be made of various materials, such as copper, iron, aluminum, stainless steel, or an aluminum alloy. This is not particularly limited in the embodiments of the present application.

There may be one or more electrode assemblies 10 accommodated in the housing 21.

The housing 21 and the end cover 22 can be independent components. For example, an opening can be provided on the housing 21, and the end cover 22 covers the opening at the opening to form the internal cavity of the battery cell 7.

The end cover 22 is connected to the housing 21 through welding, binding, snap fitting, or in another manner.

The housing 21 may have an opening at one end or at two ends. In some examples, the housing 21 can be a structure with one side open, and one end cover 22 is provided and covers the housing 21. In some other examples, the housing 21 can also be a structure with two sides open, and two end covers 22 are provided. The two end covers 22 respectively cover the two openings of the housing 21.

From a perspective of an outer contour of the electrode assembly 10, the electrode assembly 10 includes a main body portion 12, a first tab portion 42, and a second tab portion 52. The first tab portion 42 and the second tab portion 52 have opposite polarities, and the first tab portion 42 and the second tab portion 52 respectively extend beyond the main body portion 12. The first tab portion 42 is a portion of a first electrode plate that is not coated with an active material layer, and the second tab portion 52 is a portion of a second electrode plate that is not coated with an active material layer. The first tab portion 42 and the second tab portion 52 are configured to draw a current from the main body portion 12. The first electrode plate and the second electrode plate have opposite polarities. In other words, one of the first electrode plate and the second electrode plate is a positive electrode plate, and the other of the first electrode plate and the second electrode plate is a negative electrode plate.

An example in which the first tab portion 42 is a positive tab, and the second tab portion 52 is a negative tab is used for description. A negative electrode current collector in the negative electrode plate that is not coated with an active material layer is the negative tab, an active material coated on the negative electrode current collector in the negative electrode plate forms a negative electrode film layer, and the negative electrode film layer and the negative electrode current collector coated with the active material are a part of the main body portion 12. A positive electrode current collector in the positive electrode plate that is not coated with an active material layer is the positive tab, an active material coated on the positive electrode current collector in the positive electrode plate forms a positive electrode film layer, and the positive electrode film layer and the positive electrode current collector coated with the active material are a part of the main body portion 12.

The positive tab and the negative tab may extend from a same end of the main body portion 12, or the positive tab and the negative tab respectively extend from two opposite ends of the main body portion 12.

The electrode assembly 10 includes a positive electrode and a negative electrode. During charging and discharging of the battery cell 7, active ions (e.g., lithium ions) are intercalated and deintercalated back and forth between the positive electrode and the negative electrode. Optionally, the electrode assembly 10 further includes an isolation member arranged between the positive electrode and the negative electrode, to reduce a risk of a short circuit between the positive electrode and the negative electrode and to allow the active ions to pass through.

In some embodiments, the positive electrode may be a positive electrode plate, and the positive electrode plate may include a positive electrode current collector and a positive electrode film layer provided on at least one surface of the positive electrode current collector. The positive electrode film layer includes a positive electrode active material.

For example, the positive electrode current collector has two opposite surfaces in a thickness direction of the positive electrode current collector, and the positive electrode film layer is provided on either or both of the two opposite surfaces of the positive electrode current collector.

In an example, the positive electrode current collector may be a metal foil or a composite current collector. For example, the metal foil may be stainless steel, copper, aluminum, nickel, carbon electrode, or aluminum or stainless steel that is surface treated with carbon, nickel, titanium or silver. The composite current collector may include a polymer material base layer and a metal layer. The composite current collector can be formed by forming a metal material (aluminum, an aluminum alloy, nickel, a nickel alloy, titanium, a titanium alloy, silver, or a silver alloy, etc.) on a polymer material substrate (for example, a substrate of polypropylene, polyethylene terephthalate, polybutylene terephthalate, polystyrene, and polyethylene).

For example, when the battery cell 7 in the embodiments of the present application is a lithium-ion battery or a lithium metal battery, the positive electrode active material may include at least one of the following materials: a phosphate, layered transition metal oxide, and a modified compound thereof. Optionally, the positive electrode active material may include layered transition metal oxide and a modified compound thereof, which promotes the energy density of the battery cell 7. However, the present application is not limited to such materials, and other conventional materials useful as a positive electrode film layer for batteries may also be used. These positive electrode active materials can be used alone or in combination with two or more.

An example of the phosphate may include, but is not limited to, at least one of lithium iron phosphate (for example, LiFePO₄ (which is also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon.

The layered transition metal oxide includes at least one of a compound having a general formula of LiₐNi_{b}Co_{c}M_{d}OₑA_{f} and a modified compound thereof. 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S and Cl.

An example of the layered transition metal oxide may include, but is not limited to, at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (which may also be referred to as NCM₃₃₃ for short), LiNi_{0.5}Co_{0.2}Mn_{0.3}O₂ (which may also be referred to as NCM₅₂₃ for short), LiNi_{0.5}Co_{0.25}Mn_{0.25}O₂ (which may also be referred to as NCM₂₁₁ for short), LiNi_{0.6}Co_{0.2}Mn_{0.2}O₂ (which may also be referred to as NCM₆₂₂ for short), LiNi_{0.8}Co_{0.1}Mn_{0.1}O₂ (which may also be referred to as NCM₈₁₁ for short), lithium nickel cobalt aluminum oxide (for example, LiNi_{0.80}Co_{0.15}Al_{0.05}O₂), and modified compounds thereof.

When the battery cell 7 in the embodiments of the present application is a sodium-ion battery or a sodium metal battery, the positive electrode active material may include, but is not limited to, at least one of sodium-transition metal oxide, a polyanionic material (for example, a phosphate, a fluorophosphate, a pyrophosphate, or a sulfate), and a Prussian blue material.

For example, the positive electrode active material used for the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material having a general formula of XₚM'_{q}(PO₄)ᵣOₓY₃₋ₓ. In the general formula of XₚM'_{q}(PO₄)ᵣOₓY₃₋ₓ, 0 < p ≤ 4, 0 < q ≤ 2, 1 ≤ r ≤ 3, 0 ≤ x ≤ 2, X includes at least one of H⁺, Li⁺, Na⁺, K⁺ and NH₄⁺, M' is a transition metal cation, and is optionally at least one of V, Ti, Mn, Fe, Co, Ni, Cu, and Zn, and Y is a halogen anion, and is optionally at least one of F, Cl, and Br.

In the embodiments of the present application, the modified compound of each of the above positive electrode active materials may be obtained by performing doping modification and/or surface coating modification on the positive electrode active material, such as carbon coating modification or fast-ion conductor coating modification.

The charging and discharging process of the battery cell 7 is accompanied by the intercalation/deintercalation and consumption of active ions such as Li. The molar content of Li is different when the battery cell 7 is discharged to different states. In the list of the positive electrode active materials in the embodiments of the present application, the molar content of Li is the one at the initial state of the material, that is, the state before feeding. The positive electrode active material is used in a battery system, and the molar content of Li may change after the charge and discharge cycles.

In the list of the positive electrode active materials in the embodiments of the present application, the molar content of oxygen O is only a theoretical value. The release of oxygen from the lattice will cause a change in the molar content of oxygen O. In fact, the molar content of oxygen O may fluctuate.

In the embodiments of the present application, a content of an element in the positive electrode active material has a meaning well-known in the art, and can be detected by using a device and a method well-known in the art. For example, following EPA 6010D-2014, an inductively coupled plasma optical emission spectrometry (ICP-OES) test is performed by using an ICP-OES spectrometer (model: Thermo ICAP7400). First, 0.4 g of the positive electrode active material is weighted, and 10 ml (concentration: 50 wt%) of aqua regia is added. The system is then placed on a flat plate at 180 °C for 30 min. After digestion on the flat plate, the system is added up to a volume of 100 mL, and a quantitative test is performed by using a standard curve method.

In some embodiments, the positive electrode may be made of a foamed metal. The foamed metal may be foamed nickel, foamed copper, foamed aluminum, a foamed alloy, foamed carbon, or the like. When a foamed metal is used as the positive electrode, the surface of the foamed metal may not be arranged with the positive electrode film layer. Certainly, the positive electrode film layer may also be arranged. For example, the foamed metal may also be filled in and/or deposited with a lithium source material, potassium metal, or sodium metal, and the lithium source material is lithium metal and/or a lithium-rich material.

In some embodiments, the positive electrode film layer further optionally includes a positive electrode conductive agent. A type of the positive electrode conductive agent is not particularly limited in the embodiments of the present application. For example, the positive electrode conductive agent may include at least one of superconducting carbon, conductive graphite, acetylene black, carbon black, Ketjen black, carbon dots, carbon nanotubes, graphene, and carbon nanofibers. In some embodiments, a content in percentage by weight of the positive electrode conductive agent in the positive electrode film layer is ≤ 5 wt%.

In some embodiments, the positive electrode film layer may further optionally include a positive electrode binder. A type of the positive electrode binder in the embodiments of the present application is not particularly limited. For example, the positive electrode binder may include at least one of polyvinylidene difluoride (PVDF), polytetrafluoroethylene (PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer and a fluorine-containing acrylate resin. In some embodiments, a content in percentage by weight of the positive electrode binder in the positive electrode film layer is ≤ 5 wt%.

The positive electrode film layer is usually formed by coating a positive electrode slurry on the positive electrode current collector, followed by drying and cold pressing. The positive electrode slurry is usually formed by dispersing the positive electrode active material, an optional conductive agent, an optional binder, and any other components in a solvent and stirring uniformly. The solvent may be, but is not limited to, N-methylpyrrolidone (NMP).

In some embodiments, when the battery cell is an ion battery, such as a lithium-ion battery, the negative electrode may be a negative electrode plate, and the negative electrode plate may include a negative electrode current collector and a negative electrode film layer provided on at least one surface of the negative electrode current collector. The negative electrode film layer includes a negative electrode active material.

For example, the negative electrode current collector has two opposite surfaces in a thickness direction of the negative electrode current collector, and the negative electrode film layer is provided on either or both of the two opposite surfaces of the negative electrode current collector.

For example, the negative electrode current collector may be a metal foil, a foamed metal, or a composite current collector. For example, the metal foil may be aluminum or stainless steel that is surface treated with silver, stainless steel, copper, aluminum, nickel, carbon electrode, carbon, nickel, or titanium. The foamed metal may be foamed nickel, foamed copper, foamed aluminum, a foamed alloy, foamed carbon, or the like. The composite current collector may include a polymer material base layer and a metal layer. The composite current collector can be formed by forming a metal material (copper, a copper alloy, nickel, a nickel alloy, titanium, a titanium alloy, silver, or a silver alloy, etc.) on a polymer material substrate (for example, a substrate of polypropylene, polyethylene terephthalate, polybutylene terephthalate, polystyrene, and polyethylene).

For example, the negative electrode active material may be a negative electrode active material used for a battery cell 7 well known in the art. For example, the negative electrode active material may include at least one of a carbon material (for example, the carbon material includes at least one of artificial graphite, natural graphite, soft carbon, and hard carbon), a silicon-based material, a tin-based material, lithium titanate, and the like. The silicon-based material may include at least one of elemental silicon, a silicon oxide compound, a silicon-carbon composite, a silicon-nitrogen composite, and a silicon alloy. The tin-based material may include at least one of elemental tin, a tin oxide compound, and a tin alloy. However, the present application is not limited to such materials, and other conventional materials useful as a negative electrode film layer for batteries may also be used. These negative electrode film layers can be used alone or in combination with two or more.

In some embodiments, the negative electrode film layer further optionally includes a negative electrode conductive agent. A type of the negative electrode conductive agent is not particularly limited in the embodiments of the present application. For example, the negative electrode conductive agent may include at least one of superconducting carbon, conductive graphite, acetylene black, carbon black, Ketjen black, carbon dots, carbon nanotubes, graphene, and carbon fibers. In some embodiments, a content in percentage by weight of the negative electrode conductive agent in the negative electrode film layer is ≤ 5 wt%.

In some embodiments, the negative electrode film layer may further optionally include a negative electrode binder. A type of the negative electrode binder in the embodiments of the present application is not particularly limited. For example, the negative electrode binder may include one or more of styrene-butadiene rubber (SBR), water-soluble unsaturated resin SR-1B, waterborne acrylic resin (for example, polyacrylic acid (PAA), polymethylacrylic acid (PMAA), and sodium polyacrylate (PAAS)), polyacrylamide (PAM), polyvinyl alcohol (PVA), sodium alginate (SA), and carboxymethyl chitosan (CMCS). In some embodiments, a content in percentage by weight of the negative electrode binder in the negative electrode film layer is ≤ 5 wt%.

In some embodiments, the negative electrode film layer may further optionally include another additive. For example, the another additive may include a thickener, for example, sodium carboxymethyl cellulose (CMC-Na) or a PTC thermistor material. In some embodiments, a content in percentage by weight of the another additive in the negative electrode film layer is ≤ 2 wt%.

In some other embodiments, when the battery cell is a metal battery, such as a lithium metal battery or a sodium metal battery, the negative electrode plate may include a negative electrode current collector and does not include a negative electrode active material. A lithium metal battery is used as an example for description. In a charging process of the lithium metal battery, lithium ions can be deposited on a surface of the negative electrode current collector to form a lithium metal layer. In a discharging process of the lithium metal battery, the lithium metal layer loses electrons to form lithium ions, and the lithium ions migrate to the positive electrode active material.

Optionally, the negative electrode plate may further include a lithium metal layer, and the lithium metal layer is provided on at least one surface of the negative electrode current collector.

Optionally, the negative electrode plate may further include an active layer (for example, including a conductive agent and a binder) provided on a surface of the negative electrode current collector. For example, the conductive agent may include at least one of superconducting carbon, conductive graphite, acetylene black, carbon black, Ketjen black, carbon dots, carbon nanotubes, graphene, and carbon fibers. For example, the binder may include one or more of styrene-butadiene rubber (SBR), water-soluble unsaturated resin SR-1B, waterborne acrylic resin (for example, polyacrylic acid (PAA), polymethylacrylic acid (PMAA), and sodium polyacrylate (PAAS)), polyacrylamide (PAM), polyvinyl alcohol (PVA), sodium alginate (SA), and carboxymethyl chitosan (CMCS).

In some embodiments, the battery cell 7 further includes an isolation member, and the isolation member includes a separator. A type of the separator is not particularly limited in the present application, and any well-known porous-structure separator with good chemical stability and mechanical stability can be selected.

The type of the separator is not particularly limited in the embodiments of the present application, and any well-known porous-structure separator with good chemical stability and mechanical stability can be selected.

In some embodiments, a material of the separator may include one or more of glass fiber, non-woven cloth, polyethylene, polypropylene, and polyvinylidene fluoride. The separator may be a single-layer thin film or a multi-layer composite film, and is not particularly limited. When the separator is the multi-layer composite film, materials of layers may be the same or different, and are not particularly limited.

In some embodiments, the separator may include a porous base film and a coating disposed on at least one side of the porous base film, where the coating may include at least one of inorganic particles or organic particles.

The porous base film may include one or more of polyethylene and polypropylene.

The inorganic particles have good heat resistance, and can improve the heat resistance of the whole separator. In a working voltage range of the sodium-ion battery, the inorganic particles basically do not undergo an oxidation and reduction reaction with the metal dendrite. In other words, the inorganic particles are configured not to undergo an oxidation and reduction reaction with an alkali metal and/or an alkali earth metal at a nominal voltage of the sodium-ion battery.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the inorganic particles include at least one of polystyrene, polyethlylene, polyimide, melamine resins, phenolic resins, polyprolylene, polyesters (for example, polyethylene terephthalate, polyethylene naphthalate, and polybutylene terephthalate), polyphenylene sulfide, aromatic polyamide, polyamideimide, polyimide, a copolymer of butyl acrylate and ethyl methacrylate, and a mixture thereof.

In some embodiments, the battery cell further includes an electrolyte solution.

During charging and discharging of the battery cell, active ions are intercalated and deintercalated back and forth between the positive electrode plate and the negative electrode plate, and the electrolyte solution functions to conduct active ions between the positive electrode plate and the negative electrode plate. A type of the electrolyte solution is not particularly limited in the embodiments of the present application, and can be selected according to actual requirements.

The electrolyte solution includes electrolyte salt and a solvent. Types of the electrolyte salt and the solvent are not particularly limited, and may be selected according to actual requirements.

When the battery cell in the embodiments of the present application is a lithium-ion battery or a lithium metal battery, for example, the electrolytic salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato)borate (LiBOB), lithium difluorophosphate (LiPO₂F₂), lithium difluorobis(oxalate) phosphate (LiDFOP), and lithium tetrafluoro(oxalato)phosphate (LiTFOP).

When the battery cell in the embodiments of the present application is a sodium-ion battery or a sodium metal battery, for example, the electrolytic salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium triflate (NaTFS), sodium difluoro(oxalato)borate (NaDFOB), sodium bis(oxalato)borate (NaBOB), sodium difluorophosphate (NaPO₂F₂), sodium difluorobis(oxalate) phosphate (NaDFOP), and sodium tetrafluoro(oxalato)phosphate (NaTFOP).

For example, the solvent includes, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution may further optionally include an additive. For example, the additive may include a negative electrode film-forming additive, a positive electrode film-forming additive, and also additives that can improve certain battery performances, such as an additive that improves the overcharge performance of the battery, an additive that improves the high- or low-temperature performance of the battery, and the like.

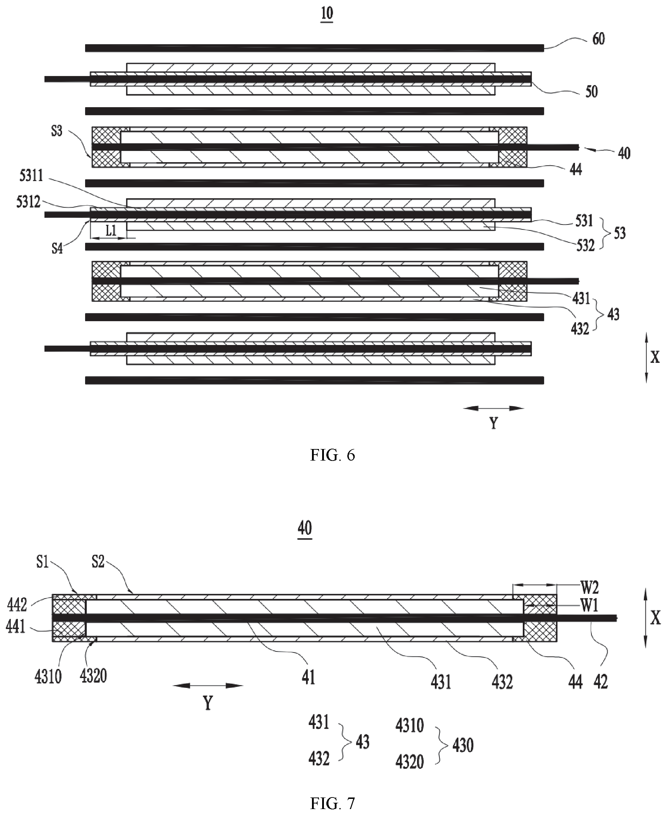

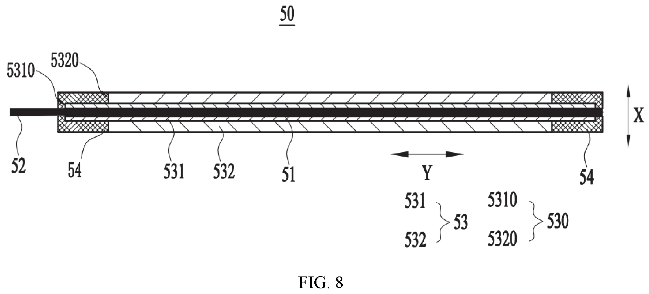

As shown in FIG. 4 to FIG. 8, in some embodiments, the electrode assembly 10 may be of a wound structure or a laminated structure. Using the laminated structure as an example for description, a plurality of positive electrode plates and a plurality of negative electrode plates may be disposed respectively, and the plurality of positive electrode plates and the plurality of negative electrode plates are alternately stacked, to form the electrode assembly 10 by using a lamination process. FIG. 6 shows a laminated electrode assembly.

In some embodiments, the battery cell 7 includes a first electrode plate 40 and a second electrode plate 50 that have opposite polarities. The first electrode plate 40 includes a first current collection portion 41, a first tab portion 42, a first active material layer 43, and a first insulation layer 44. The first tab portion 42 is connected to at least one side of the first current collection portion 41. The first active material layer 43 is provided on at least one surface of the first current collection portion 41 along a thickness direction X of the first electrode plate 40. The first active material layer 43 includes two first end surfaces 430 opposite to each other along a first direction Y. The first direction Y is parallel to a direction pointing from the first current collection portion 41 to the first tab portion 42. The first insulation layer 44 is provided on at least a surface of the first current collection portion 41, and is connected to at least one of the first end surfaces 430. Optionally, the battery cell 7 further includes a separator 60, and the separator 60 is disposed between the first electrode plate 40 and the second electrode plate 50.

The first electrode plate 40 and the second electrode plate 50 are both electrode plates in the battery cell 7. The first electrode plate 40 and the second electrode plate 50 have opposite polarities. In other words, one of the first electrode plate 40 and the second electrode plate 50 is a positive electrode plate, and the other of the first electrode plate 40 and the second electrode plate 50 is a negative electrode plate.

The first active material layer 43 is provided on the first current collection portion 41, and the first active material layer 43 is not provided on the first tab portion 42. The first tab portion 42 is configured to draw a current in the first active material layer 43. The first tab portion 42 may be disposed on one side or two sides of the first current collection portion 41. The direction pointing from the first current collection portion 41 to the first tab portion 42 is parallel to the first direction Y, and the first direction Y and the thickness direction X of the first electrode plate 40 are perpendicular to each other.

The first active material layer 43 is provided on at least one surface of the first current collection portion 41, for example, may be provided on one surface or two surfaces of the first current collection portion 41. The first active material layer 43 may partially cover the first current collection portion 41, to provide a vacant space for disposition of the first insulation layer 44. The first end surface 430 of the first active material layer 43 is covered by the first insulation layer 44, so that a risk of a short circuit between this position and the second electrode plate 50 can be reduced.

The first insulation layer 44 may be provided on either of the two first end surfaces 430, or may be provided on both of the two first end surfaces 430. When the first insulation layer 44 is provided on both of the two first end surfaces 430, a protective effect on the first active material layer 43 can be improved, and use reliability of the battery cell 7 can be improved. Because the first insulation layer 44 is connected to the first end surface 430, the first insulation layer 44 is provided on at least a surface of the first current collection portion 41. Certainly, the first insulation layer 44 may further be provided in a connection region between the first current collection portion 41 and the first tab portion 42, and may even be provided in a region of the first tab portion 42 close to the first current collection portion 41, thereby improving connection stability between the first current collection portion 41 and the first tab portion 42, and further improving the use reliability of the battery cell 7.

Therefore, in this embodiment of the present application, the first insulation layer 44 is provided on the first end surface 430 of the first active material layer 43, so that a risk of a short circuit between the first electrode plate 40 and the second electrode plate 50 can be reduced by using the first insulation layer 44, thereby improving use reliability of the battery cell 7.

In some embodiments, the second electrode plate 50 includes a second current collection portion 51 and a second active material layer 53. The second active material layer 53 is provided on at least one surface of the second current collection portion 51 along the thickness direction X. The second active material layer 53 and the first active material layer 43 are oppositely provided along the thickness direction X. Active ions migrate between the first active material layer 43 and the second active material layer 53, to implement cyclic charge and discharge of the battery cell 7. Optionally, the second electrode plate 50 further includes a second tab portion 52. The second tab portion 52 is connected to at least one side of the second current collection portion 51.

Optionally, the second electrode plate 50 may further include a second insulation layer 54. The second active material layer 53 includes two second end surfaces 530 opposite to each other along the first direction Y. The second insulation layer 54 is provided on at least a surface of the second current collection portion 51, and is connected to at least one of the second end surfaces 530. Certainly, the second electrode plate 50 may alternatively not be provided with the second insulation layer 54.

The second insulation layer 54 may be provided on either of the two second end surfaces 530, or may be provided on both of the two second end surfaces 530. When the second insulation layer 54 is provided on both of the two second end surfaces 530, a protective effect on the second active material layer 53 can be improved, and the use reliability of the battery cell 7 can be improved. Because the second insulation layer 54 is connected to the second end surface 530, the second insulation layer 54 is provided on at least a surface of the second current collection portion 51. Certainly, the second insulation layer 54 may further be provided in a connection region between the second current collection portion 51 and the second tab portion 52, and may even be provided in a region of the second tab portion 52 close to the second current collection portion 51, thereby improving connection stability between the second current collection portion 51 and the second tab portion 52, and further improving the use reliability of the battery cell 7.

Therefore, in this embodiment of the present application, the second insulation layer 54 is provided on the second end surface 530 of the second active material layer 53, so that the risk of the short circuit between the first electrode plate 40 and the second electrode plate 50 can be reduced by using the second insulation layer 54, thereby improving the use reliability of the battery cell 7.

When the first electrode plate 40 is a positive electrode plate, and the second electrode plate 50 is a negative electrode plate, the positive electrode plate may include the first insulation layer 44, and the negative electrode plate may not include the second insulation layer 54. Alternatively, the positive electrode plate may include the first insulation layer 44, and the negative electrode plate may include the second insulation layer 54.

When the first electrode plate 40 is a negative electrode plate, and the second electrode plate 50 is a positive electrode plate, the negative electrode plate may include the first insulation layer 44, and the positive electrode plate may not include the second insulation layer 54. Alternatively, the negative electrode plate may include the first insulation layer 44, and the positive electrode plate may include the second insulation layer 54.

An example in which the first electrode plate 40 is a positive electrode plate, and the second electrode plate 50 is a negative electrode plate is used for description below.

Generally, to reduce a risk of lithium plating occurring in the negative electrode plate, a size of a region for receiving lithium ions in the negative electrode plate is greater than a size of a region for providing lithium ions in the positive electrode plate. However, through such setting, a region in the negative electrode plate that extends beyond the positive electrode plate is in a stress-free state in a region in which lithium ions obtain electrons (for example, a lithium deposition region), a lithium deposition morphology is poor, and high-void dead lithium or dendritic lithium is easily generated, leading to accumulation of lithium powders in a cyclic process. This part of lithium powders may float to a side of the positive electrode through an electrolyte solution to cause a capacity exception or a short circuit, leading to hot melting of the separator or even thermal runaway of the battery cell, worsening the use reliability of the battery cell.

As shown in FIG. 4 to FIG. 8, in this embodiments of the present application, the first insulation layer 44 is connected to the first end surface 430 of the first active material layer 43, so that the first insulation layer 44 can form uniform stress on the second electrode plate 50, thereby improving a lithium deposition morphology on the second electrode plate 50, especially a lithium deposition morphology at an end portion of the second electrode plate 50, reducing a risk generated by lithium dendrite, and reducing a risk that accumulation of lithium powders deteriorates. The first insulation layer 44 can further provide large-area and effective protection for an end portion of the first active material layer 43, to increase a crawling distance by which the lithium powders or a solid electrolyte interphase SEI film drifts to the first active material layer 43, reduce accumulation of heat release induced by self-discharge when the lithium powders are in contact with the first active material layer 43, and improve the use reliability of the battery cell 7.

In some embodiments, a surface of the first insulation layer 44 facing away from the first current collection portion 41 is flush with a surface of the first active material layer 43 facing away from the first current collection portion 41. The surfaces are parallel to the first direction Y, and perpendicular to the thickness direction X of the electrode plate. When the surfaces are flush, uniform stress is applied to the second electrode plate 50, so that a lithium deposition morphology can be improved. In FIG. 7, S1 represents the surface of the first insulation layer 44 facing away from the first current collection portion 41, and S2 represents the surface of the first active material layer 43 facing away from the first current collection portion 41.

Certainly, the surface of the first insulation layer 44 facing away from the first current collection portion 41 may alternatively be not flush with the surface of the first active material layer 43 facing away from the first current collection portion 41. For example, the surface of the first insulation layer 44 facing away from the first current collection portion 41 extends beyond the surface of the first active material layer 43 facing away from the first current collection portion 41 along the thickness direction X. Through such disposition, a risk of heat release induced by self-discharge between lithium powders and the positive electrode plate when the lithium powders at the end portion of the negative electrode plate drift to the surface of the positive electrode plate can be further reduced. Alternatively, the surface of the first active material layer 43 facing away from the first current collection portion 41 extends beyond the surface of the first insulation layer 44 facing away from the first current collection portion 41.

In this embodiment of the present application, the first active material layer 43 may be provided by a single film layer, or may be provided by a plurality of film layers. When the first active material layer 43 is provided by a plurality of film layers, the first active material layer 43 may be more than two film layers, for example, two layers, three layers, or four layers. An example in which the first active material layer 43 includes two layers is used for description. The first active material layer 43 includes a first film layer 431 and a second film layer 432. The first film layer 431 is provided on at least one surface of the first current collection portion 41 along the thickness direction X. The second film layer 432 is provided on a surface of the first film layer 431 facing away from the first current collection portion 41. The first film layer 431 includes two first surfaces 4310 opposite to each other along the first direction Y. The second film layer 432 includes two second surfaces 4320 opposite to each other along the first direction Y. The first end surface 430 includes the first surface 4310 and the second surface 4320. Both the first surface 4310 and the second surface 4320 are connected to the first insulation layer 44.

Double-layer coating can increase a coating weight of the first electrode plate 40, thereby improving an energy density of the battery cell 7. The first insulation layer 44 can protect end surfaces of the first film layer 431 and the second film layer 432, to reduce a risk of heat release induced by self-discharge when lithium powders drift to an edge of the first active material layer 43, thereby improving the use reliability of the battery cell 7.

Optionally, a thickness of the first film layer 431 is greater than a thickness of the second film layer 432. The thickness of the first film layer 431 is greater, so that a capacity of the first electrode plate 40 can be effectively improved, thereby improving the energy density of the battery cell 7.

For example, the thickness of the first film layer 431 ranges from 10 µm to 100 µm, such as 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm, or within a range formed by any two of the foregoing values.

For example, the thickness of the second film layer 432 ranges from 10 µm to 80 µm, such as 10 µm, 15 µm, 20 µm, 25 µm, 30 µm, 35 µm, 40 µm, 45 µm, 50 µm, 55 µm, 60 µm, 65 µm, 70 µm, 75 µm, or 80 µm, or within a range formed by any two of the foregoing values.

Types of positive electrode active materials in the first film layer 431 and the second film layer 432 may be at least one of the foregoing described phosphate, layered transition metal oxide, and modified compound thereof, and details are not described herein again. Types and contents of positive electrode conductive agents and positive electrode binders in the first film layer 431 and the second film layer 432 may use the foregoing described solutions, and details are not described herein again.

A dimension of the first film layer 431 and a dimension of the second film layer 432 in the first direction Y may be equal or unequal. Optionally, the first film layer 431 extends beyond the second film layer 432 along the first direction Y. In other words, a part of the first film layer 431 protrudes from the second film layer 432 along the first direction Y. In this case, the dimension of the first film layer 431 and the dimension of the second film layer 432 are unequal. Optionally, the dimension of the first film layer 431 along the first direction Y is greater than the dimension of the second film layer 432 along the first direction Y. The first film layer 431 may extend beyond at least one side, for example, any one or two sides, of the second film layer 432 along the first direction Y. A dimension of the first film layer 431 along the first direction Y is larger, so that a capacity of the first electrode plate 40 can be further improved, thereby improving the energy density of the battery cell 7. In addition, it is beneficial for a step structure of the first insulation layer 44 to cover the edge of the first active material layer 43, and a connection area between the first insulation layer 44 and the first active material layer 43 can be increased, thereby improving combination stability between the first insulation layer 44 and the first active material layer 43.

In some embodiments, the first insulation layer 44 includes a first insulation portion 441 and a second insulation portion 442. The first insulation portion 441 is disposed on a surface of the first current collection portion 41, and is connected to the first surface 4310. The second insulation portion 442 is disposed on a surface of the first insulation portion 441 facing away from the first current collection portion 41, and is connected to the second surface 4320. The first insulation portion 441 and the second insulation portion 442 may use a same material or similar materials, and there may be no obvious boundary between the first insulation portion 441 and the second insulation portion 442. Alternatively, the first insulation portion 441 and the second insulation portion 442 may use different materials, and there may be a boundary between the first insulation portion 441 and the second insulation portion 442.

The first insulation portion 441 protects an edge, namely, the first surface 4310, of the first film layer 431, and the second insulation portion 442 protects an edge, namely, the second surface 4320, of the second film layer 432, so that the risk of heat release induced by self-discharge when the lithium powders are in contact with the first active material layer 43 can be reduced.

Optionally, the second insulation portion 442 extends beyond the first surface 4310 along the first direction Y. Through such disposition, a part of the second insulation portion 442 protrudes from the first insulation portion 441 along the first direction Y, and the second insulation portion 442 is enabled to further perform insulation protection on the first film layer 431, for example, protect an exposed surface of the first film layer 431 facing away from the first current collection portion 41, thereby further reducing the risk of heat release induced by self-discharge when the lithium powders are in contact with the first active material layer 43. Certainly, a surface of the second insulation portion 442 may alternatively be flush with the first surface 4310.

When the second insulation portion 442 extends beyond the first surface 4310 along the first direction Y, the first insulation portion 441 may extend beyond the second insulation portion 442, or a surface of the first insulation portion 441 is flush with the surface of the second insulation portion 442. Specifically, a surface of the second insulation portion 442 facing away from the second film layer 432 is flush with a surface of the first insulation portion 441 facing away from the first film layer 431. In this case, the second insulation portion 442 can improve a protective effect on the first film layer 431. In addition, the first insulation layer 44 and the first active material layer 43 are basically provided with equal thicknesses, so that a more uniform pressure can be applied to the second electrode plate 50. Therefore, a lithium deposition morphology in the second electrode plate 50 is more excellent, and it is not easy to form a lithium dendrite, thereby further improving the use reliability of the battery cell 7.

For example, a dimension of the first insulation portion 441 along the first direction Y ranges from 0.5 mm to 15 mm, such as 0.5 mm, 0.8 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, or 15 mm, or within a range formed by any two of the foregoing values. When the dimension of the first insulation portion 441 along the first direction Y falls within the foregoing range, an edge of the first film layer 431 can be effectively insulated and protected. W1 in FIG. 7 represents the dimension of the first insulation portion 441 along the first direction Y.

For example, a dimension of the second insulation portion 442 along the first direction Y ranges from 0.2 mm to 3 mm, such as 0.2 mm, 0.5 mm, 0.8 mm, 1 mm, 1.5 mm, 2 mm, 2.5 mm, or 3 mm, or within a range formed by any two of the foregoing values. When the dimension of the second insulation portion 442 along the first direction Y falls within the foregoing range, an edge of the second film layer 432 can be effectively insulated and protected. W2 in FIG. 7 represents the dimension of the second insulation portion 442 along the first direction Y.

A thickness of the first insulation layer 44 is basically the same as a thickness of the first active material layer 43, and a thickness difference is ±2 µm. Corresponding to setting of the thicknesses of the first film layer 431 and the second film layer 432, the thickness of the first film layer 431 is basically the same as a thickness of the first insulation portion 441, and a thickness difference is ±2 µm; and the thickness of the second film layer 432 is basically the same as a thickness of the second insulation portion 442, and a thickness difference is ±2 µm.

Correspondingly, when the thickness of the first film layer 431 is greater than the thickness of the second film layer 432, the thickness of the first insulation portion 441 is greater than the thickness of the second insulation portion 442.

For example, the thickness of the first insulation portion 441 ranges from 10 µm to 100 µm, such as 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm, or within a range formed by any two of the foregoing values.

For example, the thickness of the second insulation portion 442 ranges from 10 µm to 80 µm, such as 10 µm, 15 µm, 20 µm, 25 µm, 30 µm, 35 µm, 40 µm, 45 µm, 50 µm, 55 µm, 60 µm, 65 µm, 70 µm, 75 µm, or 80 µm, or within a range formed by any two of the foregoing values.

In some embodiments, a host material of the first insulation portion 441 includes at least one of an inorganic insulating material and an organic insulating material. In this embodiment of the present application, the host material is a material having a largest mass percentage.

In some embodiments, the inorganic insulating material includes inorganic particles. The inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂. Inorganic particles can have functions of insulation and heat resistance, thereby improving an insulation effect and a heat resistance effect on the edge of the first active material layer 43.

For example, the organic insulating material includes one or more of polyolefin, epoxy resin, polyacrylic acid PAA, and styrene-butadiene rubber SBR. For example, the polyolefin includes one or more of polyvinylidene fluoride PVDF and polytetrafluoroethylene PTFE. A binding force between the organic insulating material and the first active material layer 43 is stronger, so that the first active material layer 43 can be excellently insulated and protected.

The first insulation portion 441 is disposed outside the first film layer 431, and the second insulation portion 442 is disposed outside the second film layer 432. Lithium ions in the first film layer 431 migrate to the second film layer 432, and are deintercalated from the second film layer 432 and migrate to the second electrode plate 50. In some embodiments, the second active material layer 53 of the second electrode plate 50 extends beyond the second film layer 432 along the first direction Y, so that substantially all the lithium ions in the second film layer 432 can be received by the second active material layer 53.

In some embodiments, a projection plane of the second active material layer 53 partially overlaps a projection plane of the first insulation layer 44 along the thickness direction X. The first insulation layer 44 is located at an edge of the first active material layer 43 along the first direction Y, and the projection plane of the second active material layer 53 partially overlaps the projection plane of the first insulation layer 44 along the thickness direction X. This means that a region in which lithium ions are deintercalated from the first active material layer 43 is smaller than a region in which the second active material layer 53 receives lithium ions, so that substantially all the lithium ions deintercalated from the first active material layer 43 can be received by the second active material layer 53, thereby reducing a risk of lithium plating from the second electrode plate 50. In this embodiment of the present application, the projection plane along the thickness direction X means that the thickness direction X is parallel to a normal line of the projection plane, that is, the thickness direction X is perpendicular to the projection plane.

In some embodiments, the second active material layer 53 may be provided by a single film layer, or may be provided by a plurality of film layers. When the second active material layer 53 is provided by a plurality of film layers, the second active material layer 53 may be more than two film layers, for example, two layers, three layers, or four layers. An example in which the second active material layer 53 includes two layers is used for description. The second active material layer 53 includes a third film layer 531 and a fourth film layer 532. The third film layer 531 is provided on at least one surface of the second current collection portion 51 along the thickness direction X. The fourth film layer 532 is provided on a surface of the third film layer 531 facing away from the second current collection portion 51.

When the second electrode plate 50 includes the second insulation layer 54, the second insulation layer 54 is connected to the third film layer 531 and the fourth film layer 532. Specifically, the third film layer 531 includes two third surfaces 5310 opposite to each other along the first direction Y, and the fourth film layer 532 includes two fourth surfaces 5320 opposite to each other along the first direction Y. The second end surface 530 includes the third surface 5310 and the fourth surface 5320, and both the third surface 5310 and the fourth surface 5320 are connected to the second insulation layer 54. Disposition of the second insulation layer 54 may further enable the entire second electrode plate 50 to bear a more uniform force. Certainly, the second electrode plate 50 may alternatively not be provided with the second insulation layer 54.

A dimension of the third film layer 531 and a dimension of the fourth film layer 532 in the first direction Y may be equal or unequal. Optionally, the dimension of the third film layer 531 and the dimension of the fourth film layer 532 in the first direction Y are unequal. For example, the third film layer 531 extends beyond the fourth film layer 532 along the first direction Y, the dimension of the third film layer 531 along the first direction Y is greater than the dimension of the fourth film layer 532 along the first direction Y, and the third film layer 531 may extend beyond the second film layer 432 along the first direction Y, to help improve a capacity of the negative electrode plate, thereby improving the energy density of the battery cell 7.

Optionally, a projection plane of the third film layer 531 partially overlaps the projection plane of the first insulation layer 44 along the thickness direction X. Because the dimension of the third film layer 531 in the first direction Y is greater than the dimension of the fourth film layer 532, and an edge of the third film layer 531 in the first direction Y is an edge of the second active material layer 53, a region in which the third film layer 531 receives lithium ion is larger than the region in which lithium ions are deintercalated from the first active material layer 43, thereby reducing a risk of lithium plating from the third film layer 531 in the second electrode plate 50.

Further optionally, a projection plane of the fourth film layer 532 partially overlaps the projection plane of the first insulation layer 44 along the thickness direction X. Because the dimension of the third film layer 531 in the first direction Y is greater than the dimension of the fourth film layer 532, when the fourth film layer 532 partially overlaps the projection plane of the first insulation layer 44, the region in which the second active material layer 53 receives the lithium ions can be further enlarged, thereby reducing the risk of lithium plating from the second electrode plate 50.

When the third film layer 531 extends beyond the fourth film layer 532 along the first direction Y, the third film layer 531 includes a film-layer body 5311 and a film-layer extension portion 5312. The film-layer body 5311 is disposed opposite to the fourth film layer 532 along the thickness direction X. The film-layer extension portion 5312 is connected to at least one side of the film-layer body 5311 along the first direction Y, and extends beyond the fourth film layer 532.

Optionally, a surface of the film-layer extension portion 5312 facing away from the film-layer body 5311 is flush with a surface of the first insulation layer 44 facing away from the first active material layer 43. Through such disposition, the first electrode plate 40 can apply a uniform pressure to the film-layer extension portion 5312, so that lithium is more uniformly deposited on the film-layer extension portion 5312, a deposition morphology is improved, and a risk of lithium plating can be reduced. In FIG. 6, S3 represents the surface of the first insulation layer 44 facing away from the first active material layer 43, and S4 represents the surface of the film-layer extension portion 5312 facing away from the film-layer body 5311.

Optionally, the first insulation layer 44 extends beyond the film-layer extension portion 5312 along the first direction Y. The first insulation layer 44 can cover a foreign object such as a glitch on the second electrode plate 50, thereby further reducing a risk of a short circuit between a positive electrode and a negative electrode, and improving the use reliability of the battery cell 7.

For example, a dimension of the film-layer extension portion 5312 along the first direction Y ranges from 0.2 mm to 5 mm, such as 0.2 mm, 0.5 mm, 0.8 mm, 1 mm, 1.2 mm, 1.5 mm, 1.8 mm, 2 mm, 2.2 mm, 2.5 mm, 2.8 mm, 3 mm, 3.2 mm, 3.5 mm, 3.8 mm, 4 mm, 4.2 mm, 4.5 mm, 4.8 mm, or 5 mm, or within a range formed by any two of the foregoing values. When the dimension of the film-layer extension portion 5312 along the first direction Y falls within the foregoing range, the region in which the second active material layer 53 receives the lithium ions can be enlarged, thereby reducing the risk of lithium plating from the second electrode plate 50. L1 in FIG. 6 represents the dimension of the film-layer extension portion 5312 along the first direction Y.

Optionally, a thickness of the third film layer 531 ranges from 0.005 µm to 100 µm, such as 0.005 um, 0.01 um, 0.1 um, 1 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm, or within a range formed by any two of the foregoing values.

Optionally, a thickness of the fourth film layer 532 ranges from 0.05 µm to 100 µm, such as 0.05 µm, 1 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm, or within a range formed by any two of the foregoing values.

A thickness of the second insulation layer 54 is basically the same as a thickness of the second active material layer 53, and a thickness difference is ±2 µm.

In this embodiment of the present application, the battery cell 7 may be a lithium-ion battery or a lithium metal battery.

When the battery cell 7 is a lithium metal battery, the second electrode plate 50 is a negative electrode plate, and an active material in the second active material layer 53 is a material that can induce lithium deposition or a material in which lithium can be embedded.

The active material may include lithium metal or may not include lithium metal.

Optionally, the second active material layer 53 may include an active material that can induce lithium deposition, such as a conductive agent (at least one of superconducting carbon, conductive graphite, acetylene black, carbon black, Ketjen black, carbon dots, carbon nanotubes, silicon carbide, a silicon oxide compound, graphene, and carbon fibers). Optionally, an active material in the fourth film layer 532 may include at least one of superconducting carbon, conductive graphite, acetylene black, carbon black, Ketjen black, carbon dots, carbon nanotubes, silicon carbide, a silicon oxide compound, graphene, and carbon nanofibers. Optionally, the fourth film layer 532 may include at least one of carbon tube fibers and grapheme. The foregoing material has a large specific surface area, and can reduce a local current density, induce lithium deposition, improve a lithium deposition morphology, and relieve dendrite generation.

Optionally, the active material in the fourth film layer 532 may further include lithium metal.

When the battery cell 7 is a lithium-ion battery, the second electrode plate 50 is a negative electrode plate, and the second active material layer 53 may include a negative electrode active material.

Optionally, the active material in the fourth film layer 532 may include a graphite material, for example, at least one of artificial graphite and natural graphite. This type of graphite material has excellent kinetic performance.

Regardless of the lithium-ion battery or the lithium metal battery, in some embodiments, the active material in the third film layer 531 may include one or more of a silicon-based material, a graphite material, a gold-based material, a silver-based material, a tin-based material, a bismuth-based material, a magnesium-based material, a zinc-based material, and a phosphorus-based material. This type of active material has a high gram capacity, to help improve the energy density of the battery cell 7. For example, a gram capacity of a graphite material with a high gram capacity ranges from 350 mAh/g to 370 mAh/g.

For example, the silicon-based material may include at least one of elemental silicon, a silicon oxide compound, a silicon-carbon composite, a silicon-nitrogen composite, and a silicon alloy.

For example, the gold-based material may include at least one of elemental gold, a gold oxide compound, and a gold alloy.

For example, the silver-based material may include at least one of elemental silver, a silver oxide compound, and a silver alloy.

For example, the tin-based material may include at least one of elemental tin, a tin oxide compound, and a tin alloy.

For example, the bismuth-based material may include at least one of elemental bismuth, a bismuth oxide compound, and a bismuth alloy.

For example, the magnesium-based material may include at least one of elemental magnesium, a magnesium oxide compound, and a bismuth alloy.

For example, the zinc-based material may include at least one of elemental zinc, a zinc oxide compound, and a bismuth alloy.

For example, the phosphorus-based material may include at least one of black phosphorus and red phosphorus.

In a specific embodiment of the present application, the battery cell 7 includes the first electrode plate 40 and the second electrode plate 50 that have opposite polarities. The first electrode plate 40 includes the first current collection portion 41, the first tab portion 42, the first active material layer 43, and the first insulation layer 44. The first tab portion 42 is connected to at least one side of the first current collection portion 41. The first active material layer 43 is provided on two surfaces of the first current collection portion 41 along the thickness direction X of the first electrode plate 40. The first active material layer 43 includes the two first end surfaces 430 opposite to each other along the first direction Y. The first insulation layer 44 is provided on at least a surface of the first current collection portion 41, and is connected to the two first end surfaces 430. The surface of the first insulation layer 44 facing away from the first current collection portion 41 is flush with the surface of the first active material layer 43 facing away from the first current collection portion 41. The first electrode plate 40 is the positive electrode plate, and the second electrode plate 50 is the negative electrode plate.

Therefore, in this embodiment of the present application, the first insulation layer 44 is provided on the first end surface 430 of the first active material layer 43, so that the risk of the short circuit between the first electrode plate 40 and the second electrode plate 50 can be reduced by using the first insulation layer 44, thereby improving the use reliability of the battery cell 7. In addition, the first electrode plate 40 can apply uniform stress to the second electrode plate 50, so that the lithium deposition morphology can be improved, and a risk generated by the lithium dendrite can be reduced, thereby further improving the use reliability of the battery cell 7.

Although the present application has been described with reference to the preferred embodiments, various improvements can be made thereto and components thereof can be replaced with equivalents without departing from the scope of the present application. In particular, provided that there is no structural conflict, the various technical features mentioned in each embodiment can be combined in any way. The present application is not limited to the particular examples disclosed herein, but includes all technical solutions that fall within the scope of the claims.

## Claims

1. A battery cell, comprising a first electrode plate and a second electrode plate that have opposite polarities, wherein the first electrode plate comprises:
a first current collection portion;
a first tab portion, connected to at least one side of the first current collection portion;
a first active material layer, provided on at least one surface of the first current collection portion along a thickness direction of the first electrode plate, wherein the first active material layer comprises two first end surfaces opposite to each other along a first direction, the first direction being parallel to a direction pointing from the first current collection portion to the first tab portion; and
a first insulation layer, provided on at least a surface of the first current collection portion, and connected to at least one of the first end surfaces.

2. The battery cell according to 1, wherein a surface of the first insulation layer facing away from the first current collection portion is flush with a surface of the first active material layer facing away from the first current collection portion.

3. The battery cell according to claim 1 or 2, wherein the first active material layer comprises:
a first film layer, provided on at least one surface of the first current collection portion along the thickness direction, wherein the first film layer comprises two first surfaces opposite to each other along the first direction; and
a second film layer, provided on a surface of the first film layer facing away from the first current collection portion, wherein the second film layer comprises two second surfaces opposite to each other along the first direction,
wherein the first end surface comprises the first surface and the second surface, and both the first surface and the second surface are connected to the first insulation layer.

4. The battery cell according to claim 3, wherein the first film layer extends beyond the second film layer along the first direction.

5. The battery cell according to claim 3 or 4, wherein the first insulation layer comprises:
a first insulation portion, disposed on a surface of the first current collection portion, and connected to the first surface; and
a second insulation portion, disposed on a surface of the first insulation portion facing away from the first current collection portion, and connected to the second surface.

6. The battery cell according to claim 5, wherein a surface of the second insulation portion facing away from the second film layer is flush with a surface of the first insulation portion facing away from the first film layer.

7. The battery cell according to claim 5 or 6, wherein:
a dimension of the first insulation portion along the first direction ranges from 0.5 mm to 15 mm; and/or
a dimension of the second insulation portion along the first direction ranges from 0.2 mm to 3 mm.

8. The battery cell according to any one of claims 1 to 7, wherein a host material of the first insulation layer comprises at least one of an inorganic insulating material and an organic insulating material.

9. The battery cell according to claim 8, wherein:
the inorganic insulating material comprises inorganic particles, and the inorganic particles comprise one or more of boehmite, aluminum oxide, aluminum hydroxide, barium sulfate, magnesium oxide, magnesium hydroxide, calcium oxide, cerium oxide, zirconium titanate, barium titanate, and magnesium fluoride; and/or
the organic insulating material comprises one or more of polyolefin, epoxy resin, polyacrylic acid, and styrene-butadiene rubber.

10. The battery cell according to any one of claims 1 to 9, wherein the second electrode plate comprises a second current collection portion and a second active material layer, wherein the second active material layer is provided on at least one surface of the second current collection portion along the thickness direction, and the second active material layer and the first active material layer are oppositely provided along the thickness direction.

11. The battery cell according to claim 10, wherein:
the first electrode plate is a positive electrode plate, and the second electrode plate is a negative electrode plate; and
a projection plane of the second active material layer partially overlaps a projection plane of the first insulation layer along the thickness direction.

12. The battery cell according to claim 10 or 11, wherein the second active material layer comprises:
a third film layer, provided on at least one surface of the second current collection portion along the thickness direction; and
a fourth film layer, provided on a surface of the third film layer facing away from the second current collection portion,
wherein the third film layer extends beyond the fourth film layer along the first direction.

13. The battery cell according to claim 12, wherein a projection plane of the third film layer partially overlaps the projection plane of the first insulation layer along the thickness direction.

14. The battery cell according to claim 12 or 13, wherein a projection plane of the fourth film layer partially overlaps the projection plane of the first insulation layer along the thickness direction.

15. The battery cell according to any one of claims 12 to 14, wherein the third film layer comprises:
a film-layer body, disposed opposite to the fourth film layer along the thickness direction; and
a film-layer extension portion, connected to at least one side of the film-layer body along the first direction, and extending beyond the fourth film layer,
wherein the first insulation layer extends beyond the film-layer extension portion along the first direction.

16. The battery cell according to claim 15, wherein a dimension of the film-layer extension portion along the first direction ranges from 0.2 mm to 5 mm.

17. The battery cell according to any one of claims 10 to 16, wherein:
the second active material layer comprises two second end surfaces opposite to each other along the first direction; and
the second electrode plate further comprises a second insulation layer, wherein the second insulation layer is provided on at least a surface of the second current collection portion, and is connected to at least one of the second end surfaces.

18. An electrode plate, comprising:
a first current collection portion;
a first tab portion, connected to at least one side of the first current collection portion;
a first active material layer, provided on at least one surface of the first current collection portion along a thickness direction of a first electrode plate, wherein the first active material layer comprises two first end surfaces opposite to each other along a first direction, the first direction being parallel to a direction pointing from the first current collection portion to the first tab portion; and
a first insulation layer, provided on at least a surface of the first current collection portion, and connected to at least one of the first end surfaces.

19. The electrode plate according to 18, wherein a surface of the first insulation layer facing away from the first current collection portion is flush with a surface of the first active material layer facing away from the first current collection portion.

20. The electrode plate according to claim 18 or 19, wherein the first active material layer comprises:
a first film layer, provided on at least one surface of the first current collection portion along the thickness direction, wherein the first film layer comprises two first surfaces opposite to each other along the first direction; and
a second film layer, provided on a surface of the first film layer facing away from the first current collection portion, wherein the second film layer comprises two second surfaces opposite to each other along the first direction,
wherein the first end surface comprises the first surface and the second surface, and both the first surface and the second surface are connected to the first insulation layer.

21. The electrode plate according to claim 20, wherein the first film layer extends beyond the second film layer along the first direction.

22. The electrode plate according to claim 20 or 21, wherein the first insulation layer comprises:
a first insulation portion, disposed on a surface of the first current collection portion, and connected to the first surface; and
a second insulation portion, disposed on a surface of the first insulation portion facing away from the first current collection portion, and connected to the second surface.

23. The electrode plate according to claim 22, wherein a surface of the second insulation portion facing away from the second film layer is flush with a surface of the first insulation portion facing away from the first film layer.

24. The electrode plate according to claim 22 or 23, wherein:
a dimension of the first insulation portion along the first direction ranges from 0.5 mm to 15 mm; and/or
a dimension of the second insulation portion along the first direction ranges from 0.2 mm to 3 mm.

25. A battery, comprising the battery cell according to any one of claims 1 to 17.

26. A power consuming apparatus, comprising the battery according to claim 25.
